# EUROPÄISCHE PATENTSCHRIFT

(11) **EP 2 983 854 B1**
(45) Veröffentlichungstag und Bekanntmachung des Hinweises auf die Patenterteilung: **02.08.2017**
(21) Anmeldenummer: 14712013.3
(22) Anmeldetag: 25.03.2014
(51) Int. Cl.: B23D 45/12, B23D 47/06, B25B 1/06, B25B 1/20, B25B 1/24, B23D 47/04

(54) **ZWILLINGSSPANNER**
TWIN CLAMP DEVICE
DISPOSITIF DE SERRAGE DOUBLE

(30) Priorität: 10.04.2013 DE 102013103587
(43) Veröffentlichungstag der Anmeldung: 17.02.2016
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2014/056001
(87) Internationale Veröffentlichungsnummer: WO 2014/166736

(56) Entgegenhaltungen:
- WO-A1-2012/061692
- CN-B- 101 905 269
- DE-U1- 20 001 092
- US-A- 5 330 167

## Beschreibung

Die Erfindung betrifft einen Zwillingsspanner für zwei nebeneinander angeordnete in einer Längsrichtung ausgerichtete Langprofile, gemäß dem Oberbegriff des Anspruchs 1. Ein solcher Zwillingsspanner ist aus WO 2012/061692 A bekannt. In modernen Sägebearbeitungsanlagen werden Langprofile, insbesondere Metallrohre hochpräzise abgelängt. Zum Zuführen der Metallrohre wie auch zum Festhalten der Metallrohre während des eigentlichen Sägevorgangs werden Spanneinrichtungen verwendet. Spanneinrichtungen sind in Form von Einfach- oder Doppelspannern im Stand der Technik bekannt. Bei Einfach- oder Doppelspannern werden die Rohre unter direktem Kontakt miteinander festgespannt.
In der CH 413 751 A ist eine Vorrichtung zum zentrischen Spannen von zylindrischen oder annähernd zylindrischen Werkstücken offenbart, mit der jedoch nachteiligerweise nicht zwei Rohre gleichzeitig eingespannt werden können.
Aus der US 2006/0255521 A1 ist eine Doppelspannvorrichtung für zwei Rohre bekannt, die das manuelle Einspannen zweier Rohrstücke gestattet, wobei die Klemmbacken den Rundungen der einzuspannenden Rohrstücke genau angepasst sind und daher Rohre mit unterschiedlichen Durchmessern mit derselben Backe nicht eingespannt werden können. Zum anderen ändert sich beim Einspannen von Rohren unterschiedlicher Durchmesser die Lage der Mittelachse im Raum, so dass eine maschinelle Nachbearbeitung z. B. für ein hochpräzises Ablängen nicht mit hinreichender Präzision möglich ist.
Die WO 2012/061692 A1 beschreibt eine Spannvorrichtung für Rohre. Dabei werden die Rohre separat voneinander mittels eines manuell betätigten Druckmechanismus eingespannt.
In der CN 101905269 ist ein Spannmechanismus für zwei parallel zueinander angeordnete Rohre offenbart, wobei die beiden Spannmechanismen gemeinsam betätigt werden, eine Kupplung der beiden Mechanismen ist nicht vorgesehen.
Des Weiteren sind Zwillingsspanner bekannt, die ein gleichzeitiges, aber untereinander kontaktloses Einspannen von zwei Rohren ermöglichen. Die bekannten Zwillingsspanner weisen jedoch erhebliche Nachteile auf.

Eine Art des bekannten und von der Anmelderin entwickelten Zwillingsspanners umfasst ein Zwischenspannstück sowie zwei gegeneinander verfahrbare äußere Spannbacken. Beim Vorschieben des Rohres durch den Zwillingsspanner werden die Rohraußenflächen jedoch leicht zerkratzt. Darüber hinaus ändert sich der Achsabstand zwischen den beiden Rohren mit sich änderndem Rohrdurchmesser.

Ein anderer ebenfalls von der Anmelderin entwickelter Typ eines bekannten Zwillingsspanners weist zwei Doppelspannbacken auf, die gegeneinander verfahrbar sind, deren Klemmwirkung jedoch sehr sensibel vom gleichen Rohrdurchmesser abhängt.

Es ist Aufgabe der vorliegenden Erfindung, einen Zwillingsspanner zur Verfügung zu stellen, der die oben genannten Nachteile beseitigt.

Die Aufgabe wird durch einen Zwillingsspanner gemäß dem Anspruch 1 gelöst. Der Zwillingsspanner weist einen ersten Einzelspanner auf, der eine innere erste und eine äußere erste Spannbacke aufweist und einen zweiten Einzelspanner, der eine innere zweite und eine äußere zweite Spannbacke aufweist. Die beiden Einzelspanner sind miteinander über wenigstens einen ersten beweglich gelagerten und wenigstens einen zweiten beweglich gelagerten Spannhebel mechanisch gekoppelt, und der wenigstens eine erste Spannhebel steht mit der inneren ersten und der äußeren ersten Spannbacke in Wirkverbindung, während der wenigstens eine zweite Spannhebel mit der inneren zweiten und der äußeren zweiten Spannbacke in Wirkverbindung steht. Es ist weiterhin wenigstens eine erste Federeinrichtung vorgesehen, die die innere erste und die äußere erste Spannbacke gegen eine vom wenigstens einen ersten Spannhebel ausgeübte Kraft auseinander drückt und wenigstens eine zweite Federeinrichtung, die eine innere zweite und eine äußere zweite Spannbacke gegen eine vom wenigstens einen zweiten Spannhebel ausgeübte Kraft auseinander drückt.
Die aus wenigstens einer ersten Federeinrichtung und wenigstens einer zweiten Federeinrichtung sowie dem ersten und zweiten Spannhebel nebst gemeinsamem Spannhebelbolzen bestehende Kopplung zwischen den beiden Einzelspannern ist günstigerweise so ausgebildet, dass sich Anlageflächen konzentrisch um die Rohre öffnen und schließen, so dass der Zwillingsspanner in geöffnetem Zustand ein Durchschieben der Rohre ohne Entlangschrammen an den Anlageflächen ermöglicht. Darüber hinaus eignet sich der Zwillingsspanner zum gleichzeitigen Einspannen von Rohren unterschiedlichen Außendurchmessers, wobei beide Rohre fest gespannt werden können. Daneben ist, unabhängig vom Rohrdurchmesser, der Achsabstand der beiden Rohre gleich. Vorzugsweise stützen sich der erste und zweite Spannhebel rückseitig aneinander ab. Sie müssen daher nicht zusätzlich gelagert werden.

Günstigerweise ist die gemeinsame Achse gegenüber einem Zentrischspanner, auf dem der Zwillingsspanner montiert ist, frei beweglich, d. h., dass die Achse nicht an einem Gehäuse oder dem Zentrischspanner fixiert ist, sondern während des Spannvorganges grundsätzlich frei beweglich ist. Günstigerweise ist der Spannhebelbolzen nicht gelagert.

In einer bevorzugten Ausführungsform der Erfindung liegt der wenigstens eine erste Spannhebel an der inneren ersten und der äußeren ersten Spannbacke an, und der wenigstens eine zweite Spannhebel liegt an der inneren zweiten und der äußeren zweiten Spannbacke an. Günstigerweise sind die Spannhebel nicht in festem Kontakt mit den Spannbacken, sondern bilden lediglich durch Auflage eine Verbindung zur Kraftübertragung zwischen Auflagefläche des Spannhebels und Spannbacke aus.

Vorzugsweise weisen der erste Spannhebel und der zweite Spannhebel jeweils eine Spiegelsymmetrieebene auf. Dadurch sind die Spannhebel besonders kostengünstig herstellbar.

Vorzugsweise sind der erste und zweite Einzelspanner auf einer Zentrischspanneranordnung angeordnet. Die Zentrischspanneranordnung weist günstigerweise zwei Supporte auf, die symmetrisch in einer Spannrichtung senkrecht zur Längsrichtung gegeneinander verfahren werden. Auf jedem der beiden Supporte ist einer der Einzelspanner montiert, die über den Kopplungsmechanismus miteinander in Wirkverbindung stehen.

Die Erfindung wird anhand eines Ausführungsbeispiels in zehn Figuren beschrieben. Dabei zeigen:
- Fig. 1: eine perspektivische Ansicht eines bekannten Zwillingsspanners,
- Fig. 2: eine Frontansicht des Zwillingsspanners in Fig. 1,
- Fig. 3: einen weiteren bekannten Zwillingsspanner in einer perspektivischen Ansicht,

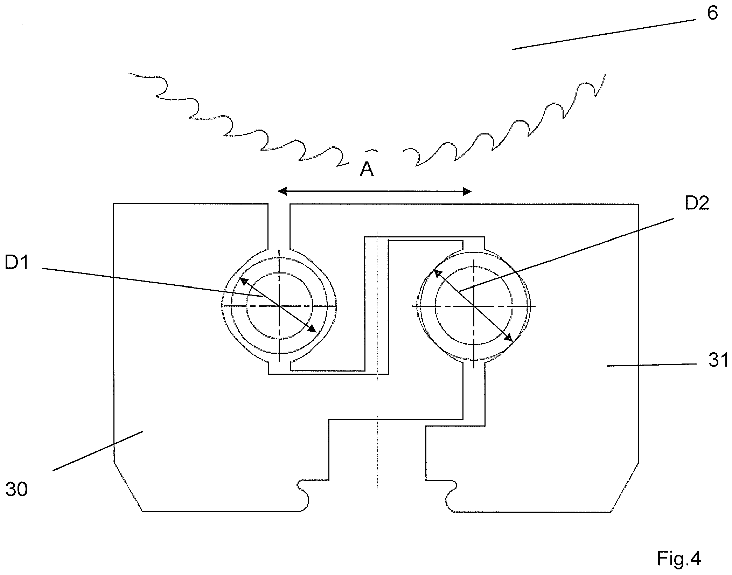

- Fig. 4: eine Frontansicht des bekannten Zwillingsspanners in Fig. 3,
- Fig. 5: eine Bauteilansicht eines erfindungsgemäßen Zwillingsspanners,
- Fig. 6: den Zwillingsspanner in Fig. 5 in einer perspektivischen Ansicht,
- Fig. 7: den Zwillingsspanner mit zwei eingespannten Rohren,
- Fig. 8: eine Schnittansicht in Fig. 6 mit zwei im Durchmesser maximalen und gleichgroßen Rohren im gespannten Zustand,
- Fig. 9: eine Schnittansicht in Fig. 6 mit zwei minimalen Rohren im geöffneten Zustand,
- Fig. 10: eine Schnittansicht entsprechend Fig. 9 mit zwei Rohren mit unterschiedlich großem Durchmesser im gespannten Zustand.

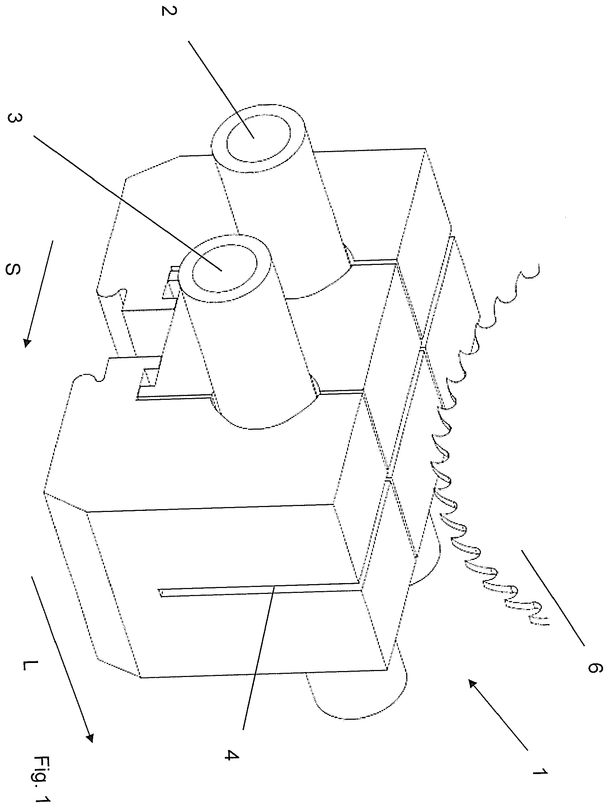

Der in Fig. 1 dargestellte bekannte Zwillingsspanner 1 ist zum Einspannen von zwei Langprofilen, insbesondere metallischen Langprofilen, vorzugsweise Metallrohren 2, 3 bestimmt. Die beiden Rohre 2, 3 sind in einer Längsrichtung L ausgerichtet, und sie sind parallel nebeneinander in einem Abstand zueinander angeordnet. Der Zwillingsspanner 1 weist eine zentrale senkrecht in einer Spannrichtung S zur Längsrichtung L der Rohre 2, 3 verlaufende Nut 4 auf, in die ein Sägeblatt 6 während des Schneidvorganges eingelassen wird und die beiden Rohre 2, 3 zerschneidet.

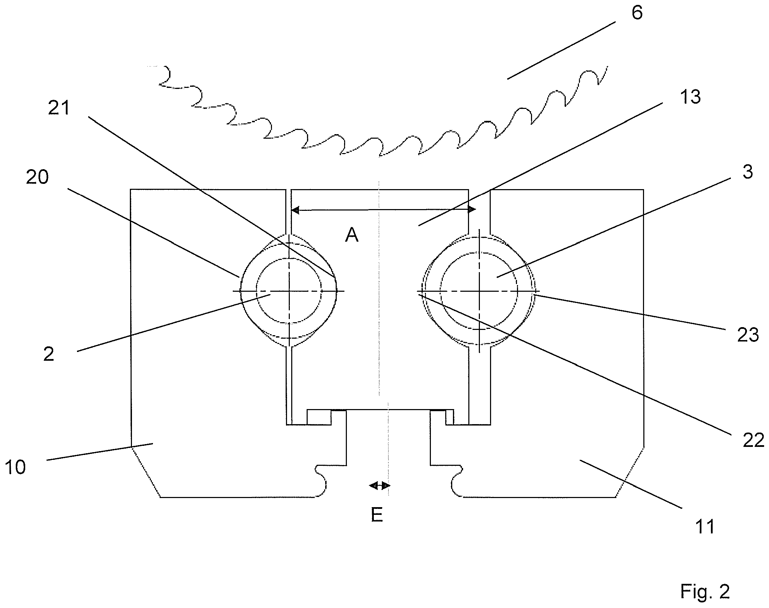

Fig. 2 zeigt den Zwillingsspanner 1 in einer Frontalansicht. Er umfasst eine erste Spannbacke 10 und eine zweite Spannbacke 11, die senkrecht zur Längsrichtung L der Rohre 2, 3 in Spannrichtung S gegeneinander verfahrbar sind. Dazu sind die erste und die zweite Spannbacke 10, 11 auf einer (nicht dargestellten) Zentrischspanneranordnung angeordnet, die ein symmetrisches Verfahren der Spannbacken 10, 11 in Spannrichtung S ermöglicht. Zwischen der ersten Spannbacke 10 und der zweiten Spannbacke 11 ist ein bewegliches Zwischenspannstück 13 vorgesehen. Zwei erste Anlageflächen 20, 21, für das erste Rohr 2 und zwei zweite Anlageflächen 22, 23 für das zweite Rohr 3 an der ersten 10 bzw. der zweiten Spannbacke 11 sowie entlang des Zwischenspannstückes 13 sind jeweils prismatisch ausgebildet, d. h., dass sie eine von der Kreisform abweichende, stärker trichterförmige Form aufweisen, um somit das drehfeste Einspannen verschiedener Rohre 2, 3 unterschiedlichen Durchmessers D1, D2 zu gestatten.

Der Abstand in Spannrichtung S zwischen den beiden Rohren 2, 3 ist durch die Geometrie des Zwischenspannstückes 13 und durch die Rohrdurmesser D1, D2 bestimmt. Mit dem Zwillingsspanner 1 können in verschiedenen Spannvorgängen Rohre 2, 3 unterschiedlichen Durchmessers D1, D2 eingespannt werden. Die Rohre 2, 3 können auch in einem Spannvorgang untereinander einen unterschiedlichen Durchmesser D1, D2 aufweisen. Ein Spannbereich des Zwillingsspanners 1 beträgt etwa fünf bis zehn Millimeter, d. h., es sind Rohrdurchmesser zwischen beispielsweise D1 = D2 = 31,5 mm bis 36,5 mm spannbar.

Nachteilig an dem Zwillingsspanner 1 ist, dass der Abstand A zwischen Rohrachsen vom Durchmesser D1, D2 der Rohre 2, 3 abhängt. Um den Abstand A zwischen verschiedenen Spannvorgängen mit im Durchmesser D1, D2 unterschiedlichen Rohren 2, 3 gleich zu halten, benötigt man für jeden Rohrdurchmesser D1, D2 ein separates Zwischenspannstück 13. Des Weiteren ist nachteilig, dass durch Außendurchmessertoleranzen der Rohre 2, 3 Schwankungen im Achsabstand entstehen, die für nachfolgende Bearbeitungsvorgänge insbesondere einem Anfasen nachteilig sind. Die beiden abgelängten Rohrabschnitte werden in dem Achsabstand weiterbefördert und der nachfolgenden Bearbeitung unter Beibehaltung des Achsabstandes unterzogen. Übliche Außendurchmessertoleranzen betragen etwa ± 0,1 mm. Das führt zu einer Abweichung des Achsabstandes A der Rohre 2, 3 bei einem Durchmesser D1 = D2 = 34 mm von A = 34 mm ±- 0,1 mm und zu einer Toleranz im Achsabstand A von etwa 0,29 mm und einer Asymmetrie E von etwa 0,4 mm.

Ein weiteres Problem ist, dass sich das Zwischenspannstück 13 nicht von den Rohren 2, 3 abhebt, wenn der Zwillingsspanner 1 geöffnet ist, um die Rohr 2, 3 vorzuschieben und deshalb beim Einschieben Kratzer auf Außenwandungen der Rohre 2, 3 entstehen können. Der Vorschub erfolgt mit Hilfe eines (nicht dargestelten) Zangeneinschiebers.

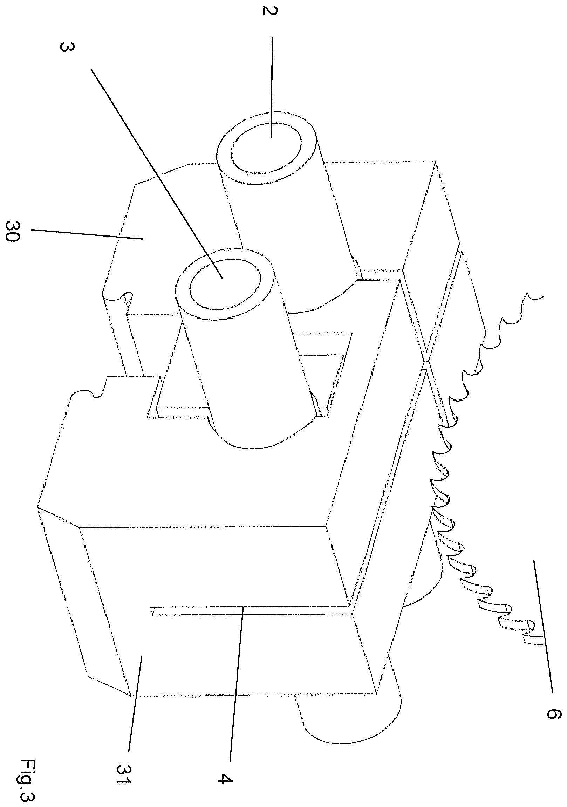

Fig. 3 zeigt einen weiteren bekannten Zwillingsspanner 1. Auch hier erfolgt die Zuführung der beiden Rohre 2, 3 durch einen nicht dargestellten Zangeneinbschieber in den Zwillingsspanner 1. Auch hier ist eine senkrecht zur Längsrichtung L in Spannrichtung S verlaufende Nut 4 für das Sägeblatt 6 vorgesehen.

Der Zwillingsspanner 1 weist eine erste und eine zweite Doppelspannbacke 30, 31 auf, die auf einem nicht dargestellten Zentrischspanner montiert sind. Bei dem Zwillingsspanner 1 ist der Achsabstand A über den gesamten Durchmesserspannbereich stets konstant. Problematisch ist, dass der Zwillingsspanner überbestimmt ist. Das heißt, wenn das erste Rohr 2 im Durchmesser D1 etwas kleiner als das zweite Rohr 3 im Durchmesser D2 ist, wird nur das im Durchmesser D2 größere Rohr 3 sicher gespannt und umgekehrt Die Durchmessertoleranzen können nur durch elastische Verformung der Rohre 2, 3 und/oder des Zwillingsspanners 1 ausgeglichen werden, beispielsweise durch wenigstens eine federbelastete Anlageflächen 20, 21, 22, 23. Der Zwillingsspanner 1 kann nur für sehr enge Durchmessertoleranzen eingesetzt werden. Die üblicherweise auftretenden Toleranzen von ± 0,1 mm können mit dem Zwillingsspanner 1 nicht ausgeglichen werden.

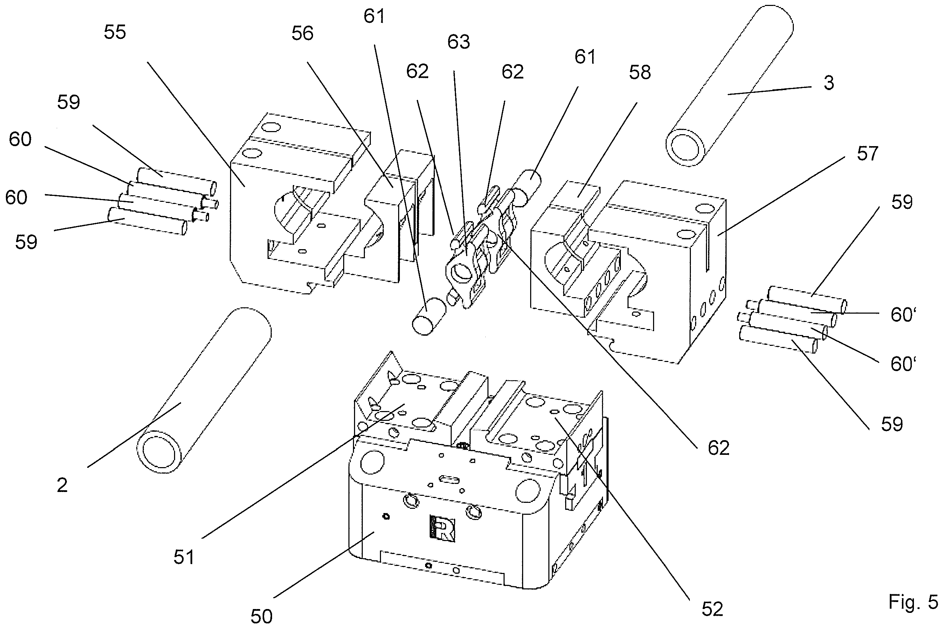

Der erfindungsgemäße Zwillingsspanner 1 ist in einer Bauteilansicht in Fig. 5 dargestellt. Er weist einen Zentrischspanner 50 mit einem ersten und einem zweiten Support 51, 52 auf, die exakt symmetrisch in Spannrichtung S gegeneinander hin und her verfahrbar sind. Des Weiteren weist der Zwillingsspanner 1 eine erste äußere 55 und eine erste innere 56 sowie eine zweite äußere 57 und eine zweite innere Spannbacke 58 auf, die miteinander über Führungsbolzen 59 und zwei erste Druckfederbolzen 60 und zwei zweite Druckfederbolzen 60' eine federbelastete Verbindung miteinander ausbilden. Die beiden inneren Spannbacken 56, 58 sind über einen Kopplungsmechanismus miteinander gekoppelt, der hier aus zwei Bausätzen besteht, wobei jeder Bausatz einen Spann hebel bolzen 61 und einen ersten 62 sowie einen zweiten 63 Spannhebel umfasst. Des Weiteren sind das erste und das zweite Rohr 2, 3 abgebildet, die eingespannt werden sollen.

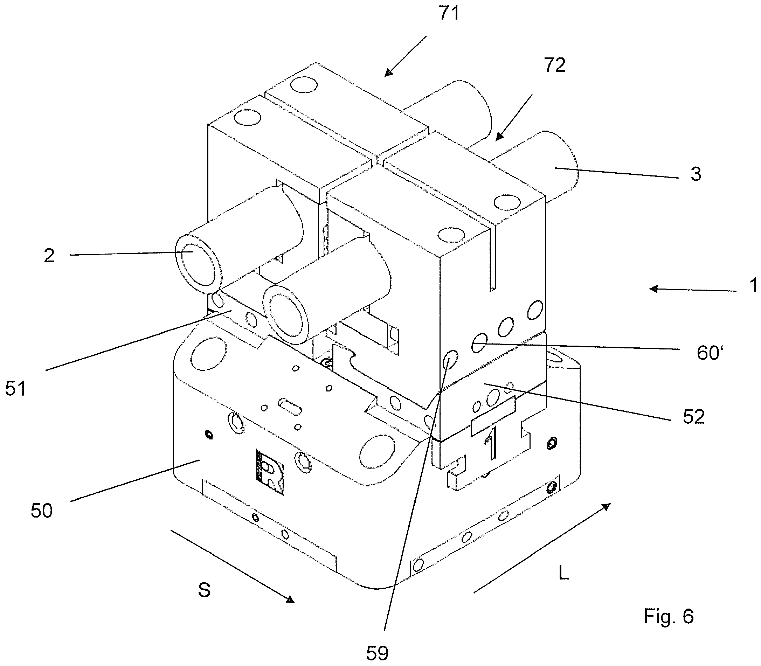

In Fig. 6 ist der Zwillingsspanner 1 der Fig. 5 in einem zusammengebauten Zustand abgebildet. Die erste äußere 55 und die erste innere Spannbacke 56 sind Bestandteile eines ersten Einzelspanners 71, die zweite äußere 57 und die zweite innere Spannbacke 58 sind Bestandteile eines zweiten Einzelspanners 72. Der erste Einzelspanner 71 ist auf dem ersten Support 51 und der zweite Einzelspanner 72 ist auf dem zweiten Support 52 des Zentrischspanners 50 montiert. Der Zentrischspanner 50 ermöglicht ein senkrecht zur Längsrichtung L der Rohre 2, 3 in Spannrichtung S exakt symmetrisches Auseinander- und Aufeinander-zu-Verfahren der beiden Supporte 51, 52. Fig. 6 zeigt das erste Rohr 2 und das zweite Rohr 3, eingespannt im ersten 71 bzw. im zweiten Einzelspanner 72.

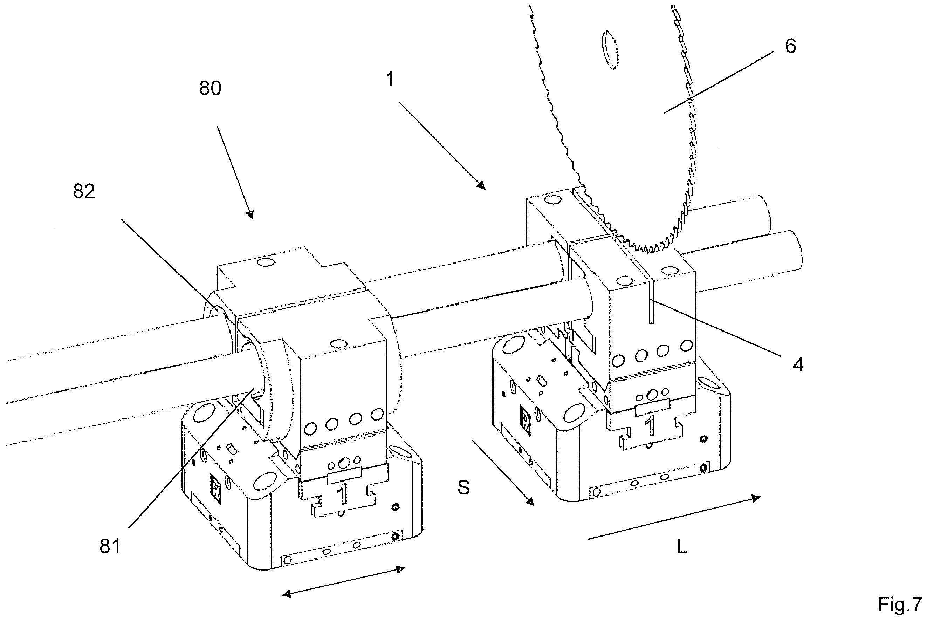

Fig. 7 zeigt die Anordnung des erfindungsgemäßen Zwillingsspanners 1 in einer Rohrschneidemaschine in einer schematischen Ansicht. Das Sägeblatt 6 ist außerhalb des Zwillingsspanners 1 über der über die gesamte Querausdehnng in Spannrichtung S des Zwillingsspanners 1 ausgebildeten Nut 4 angeordnet. Das Sägeblatt 6 ist in die Nut 4 einlassbar und schneidet beim Einlassen die beiden Rohre 2, 3 durch. Bei den Rohren 2, 3 handelt es sich vorzugsweise um Metallrohre.

Die Rohre 2, 3 werden in Fig. 7 von links nach rechts durch den Zwillingsspanner 1 geschoben, im Zwillingsspanner 1 festgespannt und abgelängt. Abgelängte Rohrabschnitte werden rechts in Fig. 7 mittels einer (nicht dargestellten) Greifvorrichtung abgenommen. Sie werden unter Beibehaltung ihres Achsabstandes A weiterbefördert und weiterbearbeitet.

Zum Zuführen der beiden Rohre 2, 3 in Längsrichtung L zum Zwillingsspanner 1 ist ein dem Zwillingsspanner 1 im Wesentlichen baugleicher Zangeneinschieber 80 vorgesehen. Gegenüber dem Zwillingsspanner 1 weist der Zangeneinschieber 80 zwei konisch ausgeformte Einführungen 81, 82 für die Rohre 2, 3 auf. Der Zangeneinschieber 80 ist mittels einer (nicht dargestellten) Verfahrvorrichtung in Längsrichtung L hin und her verfahrbar und ermöglicht es so, die Rohre 2, 3 getaktet dem Zwillingsspanner 1 zum Absägen zuzuführen.

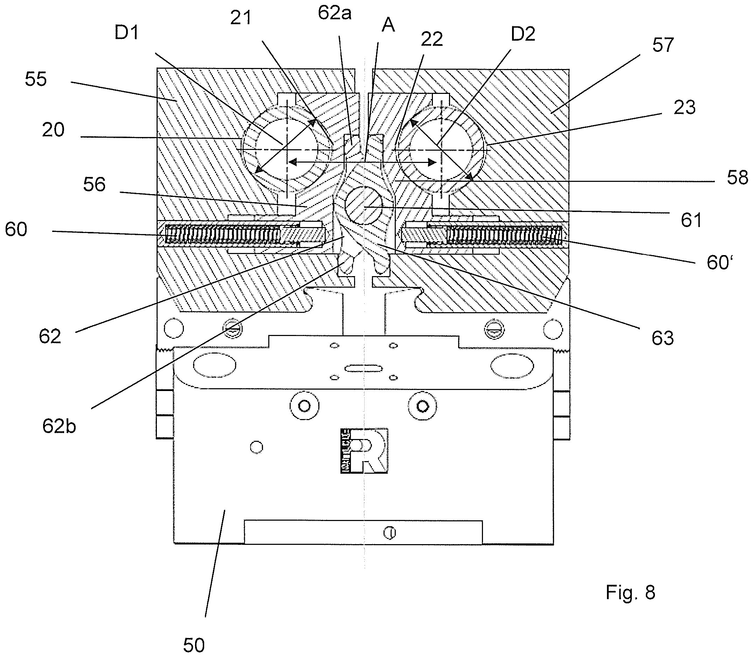

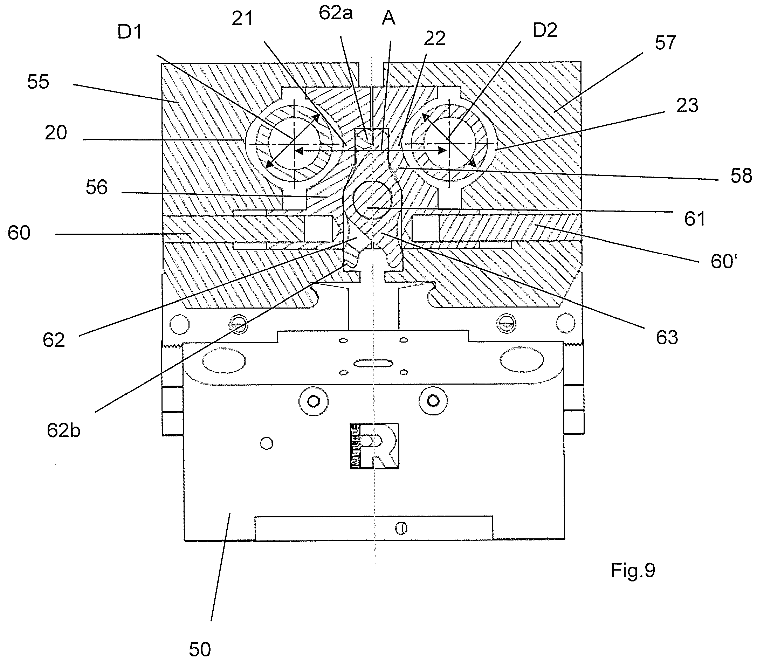

Fig. 8 zeigt den Zwillingsspanner 1 der Fign. 6 und 7 in einer Schnittansicht entlang zweier Druckfederbolzen 60, 60' und senkrecht zur Längsrichtung L und Spannrichtung S. Das erste und das zweite Rohr 2, 3 in Fig. 8 sind im Außendurchmesser gleich und maximal ausgebildet, d. h., ein größerer Rohrdurchmesser kann von dem dargestellten Zwillingsspanner 1 nicht gespannt werden. Fig. 8 zeigt den Zwillingsspanner 1 in einem geschlossenen Zustand, während Fig. 9 den Zwillingsspanner 1 in einem geöffneten Zustand zeigt. In dem geschlossenen Zustand sind die Rohre 2, 3 eingespannt, und es findet der eigentliche Schneidvorgang mittels des Sägeblattes 6 statt.

Fig. 9 zeigt eine Schnittansicht entlang der Führungsbolzen 59, die Schnittebene steht senkrecht zur Längsrichtung L und zur Spannrichtung S.

In dem geöffneten Zustand in Fig. 9 werden die Rohre 2, 3 mittels des Zangeneinschiebers 80 um die gewünschte Länge des abzuschneidenden Rohrabschnittes vorgeschoben. Beim Vorschieben berühren die Rohraußenwandungen keine der Anlageflächen 20, 21, 22, 23 und können daher nicht zerkratzen.

Fig. 8 zeigt, dass der erste und der zweite Spannhebel 62, 63 um den gemeinsamen Spannhebelbolzen 61 drehbar gelagert sind. Der Spannhebelbolzen 61 ist frei, d. h., er ist gegenüber dem Zentrischspanner 50 frei beweglich, und insbesondere sind seine Enden nicht positionsfest gelagert. Der zweite Spannhebel 63 weist, wie Fig. 5 zeigt, eine Aussparung auf, in die der erste Spannhebel 62 eingelassen ist. Durch zwei zentrale Bohrungen beider Spannhebel 62, 63 ist der gemeinsame Spannhebelbolzen 61 geführt.

Der erste Einzelspanner 71 weist die erste äußere Spannbacke 55 sowie die erste innere Spannbacke 56 auf, der erste Spannhebel 62 liegt auf innenseitigen Außenwandungen der ersten äußeren Spannbacke 55 sowie der ersten inneren Spannbacke 56 beweglich auf. Die erste äußere Spannbacke 55 und die erste innere Spannbacke 56 sind durch die beiden Druckfederbolzen 60, der die beiden Spannbacken 55, 56 auseinanderdrückt, federbelastet miteinander verbunden. Die Druckfederbolzen 60 drücken die erste innere Spannbacke 56 gegen einen dem Zentrischspanner 50 abgewandten Arm 62a des ersten Spannhebels 62 in Richtung des zweiten Einzelspanners 72. Der erste Spannhebel 62 wird auf seiner rückwärtigen Seite von dem mit ihm gekoppelten zweiten Spannhebel 63, der eine Kraft auf den ersten Spannhebel 62 ausübt, in seiner Position gehalten. Entsprechendes gilt für den zweiten Spannhebel 63 des zweiten Einzelspanners 72. Der erste Spannhebel 62 dreht sich etwas im Uhrzeigersinn und ein dem Zentrischspanner 50 zugewandter Arme 62b des ersten Spannhebels 62 liegt an einer inneren Wandung der ersten äußeren Spannbacke 55 an.

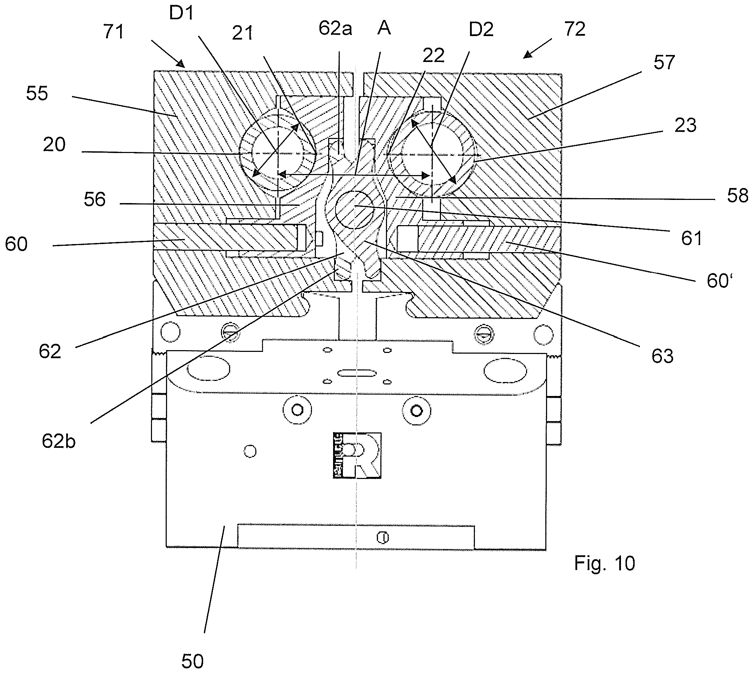

Um den Zwillingsspanner 1 zu lösen, werden die beiden Supporte 51, 52 symmetrisch auseinander verfahren, d. h. die in Fig. 8 dargestellte erste äußere Spannbacke 55 wird nach außen, d. h. in Fig. 8 nach links und die in Fig. 8 dargestellte zweite äußere Spannbacke 57 wird nach außen, d. h. in Fig. 8 nach rechts, verfahren. Durch die Federkraft der ersten Druckfederbolzen 60 wird die erste innere Spannbacke 56 in Richtung des zweiten Einzelspanners 72 gedrückt. Der erste Spannhebel 62 erhält somit ein Spiel, um sich ein Stück weit im Uhrzeigersinn zu drehen, so weit bis der dem Zentrischspanner 50 zugewandte Arm 62b wieder in Kontakt mit der ersten äußeren Spannbacke 55 gerät. Durch das Drehen des ersten Spannhebels 62 entspannt sich der eine erste Druckfederbolzen 60 wieder, um die erste innere Spannbacke 56 ein Stück weit in Richtung des zweiten Einzelspanners 72 zu bewegen. Der Zustand des geöffneten ersten Einzelspanners 71 ist in Fig. 10 dargestellt. Das Analoge gilt für das Öffnen des zweiten Einzelspanners 72.

Vorteilhafterweise öffnet sich der Zwillingsspanner 1 in der Weise, dass sich die jeweils beiden Anlageflächen 20, 21 bzw, 22, 23 symmetrisch vom ersten 2 bzw. zweiten Rohr 3 lösen und beim Durchschieben des Rohres 2, 3 durch die geöffneten Anlageflächen 20, 21, 22, 23 keine Kratzspuren an Rohraußenwandungen entstehen können.

Der erfindungsgemäße Zwillingsspanner 1 ist auch zum Einspannen von Rohren 2, 3 deutlich unterschiedlichen Durchmessers D1, D2 geeignet, wie Fig. 10 zeigt. Die Schnittfläche verläuft ebenfalls entlang der Führungsbolzen 59, und sie steht senkrecht zur Längsrichtung L und zur Spannrichtung S. Dort ist das erste Rohr 2 im Durchmesser D1 kleiner als das zweite Rohr 2. Durch den Zentrischspanner 1 werden zwar die beiden äußeren Supporte 51. 52 gleich weit nach innen bzw. außen verschoben, die Abweichung im Rohraußendurchmesser kann jedoch durch die bewegliche Anordnung des Kopplungsmechanismus aus erstem und zweitem Spannhebel 62, 63 und Spannhebelbolzen 61 ausgeglichen werden. Aufgrund der Federbelastung durch die zweiten Druckfedern 60' ist die innere zweite Spannbacke 58 etwas weiter nach innen verrückt als die innere erste Spannbacke 56, wenn sie das zweite Rohr 3 fest einspannt. Dadurch kippt das gesamte Kopplungssystem 61, 62, 63, etwas entgegen dem Uhrzeigersinn, und die Drehachse des Spannhebelbolzens 61 rückt ein Stück weit nach links zum ersten Einzelspanner 71.

Dadurch wird der obere Arm 62 a des ersten Spannhebels 62 ebenfalls etwas in Richtung des ersten Einzelspanners 71 in Fig. 10 nach links verschoben und spannt das erste im Durchmesser kleinere Rohr 2 fest ein.

Wesentlich ist, dass der Achsabstand A der beiden Rohre 2, 3 immer gleich bleibt Er ist zwischen den beiden Rohren 2, 3 mit minimalem Durchmesser D1=D2=min gemäß Fig. 9 so groß wie zwischen den beiden Rohren 2, 3 mit maximalem Durchmesser D2=D2=max gemäß Fig. 8 und gleich groß wie bei den Rohren 2, 3 mit unterschiedlichem Durchmesser D1≠D2 gemäß Fig. 10.

### Bezugszeichenliste

- 1: Zwillingsspanner
- 2: Metallrohr
- 3: Metallrohr
- 4: Nut

- 6: Sägeblatt

- 10: erste Spannbacke
- 11: zweite Spannbacke
- 13: bewegliches Zwischenspannstück

- 20: erste Anlagefläche
- 21: erste Anlagefläche
- 22: zweite Anlagefläche
- 23: zweite Anlagefläche

- 30: erste Doppelspannbacke
- 31: zweite Doppelspannbacke

- 50: Zentrischspanner
- 51: erster Support
- 52: zweiter Support

- 55: erste äußere Spannbacke
- 56: erste innere Spannbacke
- 57: zweite äußere Spannbacke
- 58: zweite innere Spannbacke
- 59: Führungsbolzen

- 60: erster Druckfederbolzen
- 60': zweiter Druckfederbolzen
- 61: Spannhebelbolzen
- 62: erster Spannhebel
- 62a: Arm
- 62b: Arm
- 63: zweiter Spannhebel

- 71: erster Einzelspanner
- 72: zweiter Einzelspanner

- 80: Zangeneinschieber
- 81: Einführung
- 82: Einführung

- A: Achsabstand
- D1: Rohrdurchmesser
- D2: Rohrdurchmesser
- E: Asymmetrie
- L: Längsrichtung
- S: Spannrichtung

## Patentansprüche

1. Zwillingsspanner für zwei nebeneinander angeordnete in einer Längsrichtung (L) ausgerichtete Langprofile (2, 3) mit
einem ersten Einzelspanner (71), der eine innere erste (56) und eine äußere erste Spannbacke (55) aufweist, und
einem zweiten Einzelspanner (72), der eine innere zweite (58) und eine äußere zweite Spannbacke (57) aufweist,
die miteinander über wenigstens einen ersten beweglich gelagerten (62) und wenigstens einen zweiten beweglich gelagerten Spannhebel (63) mechanisch gekoppelt sind, wobei
der wenigstens eine erste Spannhebel (62) mit der inneren ersten (56) und der äußeren ersten (55) Spannbacke in Wirkverbindung steht und
der wenigstens eine zweite Spannhebel (63) mit der inneren zweiten (58) und der äußeren zweiten Spannbacke (57) in Wirkverbindung steht, und
mit wenigstens einer ersten Federeinrichtung (60), die die innere erste (56) und die äußere erste Spannbacke (55) gegen eine vom wenigstens einen ersten Spannhebel (62) ausgeübte Kraft auseinanderdrückt, und
wenigstens einer zweiten Federeinrichtung (60'), die die innere zweite (58) und die äußere zweite Spannbacke (57) gegen eine vom wenigstens einen zweiten Spannhebel (63) ausgeübte Kraft auseinanderdrückt, **dadurch gekennzeichnet, dass** der wenigstens eine erste Spannhebel (62) und der wenigstens eine zweite Spannhebel (63) um eine gemeinsame Achse drehbar gelagert sind.

2. Zwillingsspanner nach Anspruch 1,
**dadurch gekennzeichnet, dass** der erste und zweite Spannhebel (62, 63) sich rückseitig aneinander abstützend ausgebildet sind.

3. Zwillingsspanner nach Anspruch 1,
**dadurch gekennzeichnet, dass** die gemeinsame Achse gegenüber dem Zwillingsspanner (1) frei beweglich ist.

4. Zwillingsspanner nach einem der Ansprüche 1 bis 3,
**dadurch gekennzeichnet, dass** der wenigstens eine erste Spannhebel (62) an der inneren ersten (56) und der äußeren ersten Spannbacke (55) anliegt und der wenigstens eine zweite Spannhebel (63) an der inneren zweiten (58) und der äußeren zweiten Spannbacke (57) anliegt.

5. Zwillingsspanner nach einem der Ansprüche 1 bis 4,
**dadurch gekennzeichnet, dass** der erste Spannhebel (62) und der zweite Spannhebel (63) jeweils eine Spiegelsymmetrieebene aufweisen.

6. Zwillingsspanner nach einem der Ansprüche 1 bis 5,
**dadurch gekennzeichnet, dass** der erste und der zweite Einzelspanner (71, 72) auf einem Zentrischspanner (50) angeordnet sind.

## Claims

1. Twin clamp device for two longitudinal profiled (2, 3) which are disposed adjacent to one another and aligned in a longitudinal direction (L), comprising
- a first individual clamp device (71) which has an inner first clamping jaw (56) and an outer first clamping jaw (55) and
- a second individual clamp device (72) which has an inner second clamping jaw (58) and an outer second clamping jaw (57),
which are mechanically coupled to one another by means of at least one first movably mounted clamping lever (62) and at least one second movably mounted clamping lever (63), wherein
- the at least one first clamping lever (62) is operatively connected to the inner first clamping jaw (56) and the outer first clamping jaw (55), and
- the at least one second clamping lever (63) is operatively connected to the inner second clamping lever (58) and the outer second clamping jaw (57), and
- and with at least one first spring means (60) which pushes the inner first clamping jaw (56) and the outer first clamping jaw (55) apart against a force exerted by the at least one first clamping lever (62), and
- at least one second spring means (60') which pushes the inner second clamping jaw (58) and the outer second clamping jaw (57) apart against a force exerted by the at least one second clamping lever (63) **characterised in that** the at least one first clamping lever (62) and the at least one second clamping lever (63) are rotatably mounted about a common axis.

2. Twin clamp device according to claim 1, **characterised in that** the first and second clamping levers (62, 63) are designed supporting on one another at the rear.

3. Twin clamp device according to claim 1, **characterised in that** the common axis is freely movable relative to the twin clamp device (1).

4. Twin clamp device according to one of claims 1 to 3, **characterised in that** the at least one first clamping lever (62) bears against the inner first clamping jaw (56) and the outer first clamping jaw (55), and the at least one second clamping lever (63) bears against the inner second clamping lever (58) and the outer second clamping jaw (57).

5. Twin clamp device according to one of claims 1 to 4, **characterised in that** the first clamping lever (62) and the second clamping lever (63) each have a mirror symmetry plane.

6. Twin clamp device according to one of claims 1 to 5, **characterised in that** the first and the second individual clamp devices (71, 72) are disposed on a central clamp device (50).

## Revendications

1. Tendeur jumelé pour deux profilés longs (2, 3) placés l'un à côté de l'autre en étant orientés dans un sens longitudinal (L) avec
un premier tendeur simple (71) qui présente une première mâchoire intérieure de serrage (56) et une première mâchoire extérieure de serrage (55) et
un second tendeur simple (72) qui présente une seconde mâchoire intérieure de serrage (58) et une seconde mâchoire extérieure de serrage (57) qui sont couplées mécaniquement l'une à l'autre par au moins un premier levier de serrage positionné mobile (62) et au moins un second levier de serrage positionné mobile (63), cependant que
le premier levier de serrage qui existe au moins (62) est en relation opérationnelle avec la première mâchoire intérieure de serrage (56) et la première mâchoire extérieure de serrage (55) et
le second levier de serrage qui existe au moins (63) est en relation opérationnelle avec la seconde mâchoire intérieure de serrage (58) et la seconde mâchoire extérieure de serrage (57) et
avec au moins un premier dispositif à ressort (60) qui écarte la première mâchoire intérieure de serrage (56) et la première mâchoire extérieure de serrage (55) à l'encontre d'une force exercée par le premier levier de serrage (62) qui existe au moins et
au moins un second dispositif à ressort (60') qui écarte la seconde mâchoire intérieure de serrage (58) et la seconde mâchoire extérieure de serrage (57) à l'encontre d'une force exercée par le second levier de serrage (63) qui existe au moins,
**caractérisé en ce que** le premier levier de serrage qui existe au moins (62) et le second levier de serrage qui existe au moins (63) sont positionnés rotatifs autour d'un axe commun.

2. Tendeur jumelé selon la revendication 1,
**caractérisé en ce que** le premier levier de serrage et le second levier de serrage (62, 63) sont configurés en s'appuyant dos à dos l'un contre l'autre.

3. Tendeur jumelé selon la revendication 1,
**caractérisé en ce que** l'axe commun est mobile librement par rapport au tendeur jumelé (1).

4. Tendeur jumelé selon l'une des revendications 1 à 3, **caractérisé en ce que** le premier levier de serrage qui existe au moins (62) repose sur la première mâchoire intérieure de serrage (56) et sur la première mâchoire extérieure de serrage (55) et le second levier de serrage qui existe au moins (63) repose sur la seconde mâchoire intérieure de serrage (58) et la seconde mâchoire extérieure de serrage (57).

5. Tendeur jumelé selon l'une des revendications 1 à 4, **caractérisé en ce que** le premier levier de serrage (62) et le second levier de serrage (63) présentent respectivement un plan de symétrie spéculaire.

6. Tendeur jumelé selon l'une des revendications 1 à 5, **caractérisé en ce que** le premier et le second tendeur simple (71, 72) sont placés sur un tendeur centré (50).
